# EUROPEAN PATENT APPLICATION

(11) **EP 2 632 037 A2**
(43) Date of publication of application: **28.08.2013**
(21) Application number: 13173363.6
(22) Date of filing: 24.06.2013
(51) Int. Cl.: H02M 1/42

(54) **Control circuit for power converter, conversion system and controlling method thereof**

(30) Priority: 24.08.2012 CN 201210305282
(71) Applicant: Delta Electronics, Inc., Taoyuan Hsien 333 (TW)
(72) Inventor: Yan, Chao, 333 Taoyuan Hsien (TW); Wang, Xiao-Yuan, 333 Taoyuan Hsien (TW); Ye, Yi-Qing, 333 Taoyuan Hsien (TW)
(74) Representative: Becker Kurig Straus

(57) **Abstract**

The disclosure provides a control circuit for a power converter, a conversion system and a controlling method thereof. The conversion system includes an AC power supply, a power converter and a control circuit. The power converter includes a first and second bridge arms connected in parallel. The first bridge arm includes a first and second switches connected in series. A second end of the first switch is connected with a first end of the second switch and coupled to a first end of the AC power supply by an inductance component. The first and second switches work at a first switching frequency. The control circuit is used for controlling the first and second switches, so that the current flowing through the inductance component is decreased to zero before the at least one first switching cycle is over.

## Description

### BACKGROUND

### Field of Invention

The invention relates to the field of power electronic technology. More particularly, the invention relates to a control circuit for a power converter, a conversion system and a controlling method for the conversion system.

### Description of Related Art

Currently, in order to reduce the serious harmonic pollution of the power grid caused by frequent use of power electronic devices, generally it is needed to introduce a power factor correction (PFC) circuit, so as to make an input current harmonic meet a determined harmonic requirement. Additionally, the development trend of PFC circuit is towards the direction of high efficiency and high power density, just as most power supply products.

Taking a bridgeless PFC circuit topology as an example, the circuit has various advantages such as low conduction loss, low common mode interference and high utilization rate of components. For example, the bridgeless PFC circuit includes a first bridge arm and a second bridge arm connected in parallel with each other. The first bridge arm is comprised of a first MOSFET and a second MOSFET. The second bridge arm is comprised of a third MOSFET and a fourth MOSFET.

When the bridgeless PFC circuit is receiving an AC input voltage, its working process can be briefly described as follows: when the input voltage is greater than zero, the second MOSFET and the fourth MOSFET are turned on, a current forms a current loop by passing through an input inductor, the second MOSFET and the fourth MOSFET, so that the input inductor stores energy; and when the second MOSFET is turned off, the current passes through the input inductor, the body diode of the first MOSFET, an electrolytic capacitor and the fourth MOSFET, so that the inductor releases the energy for charging the capacitor. Similarly, when the input voltage is smaller than zero, the first MOSFET and the third MOSFET are turned on, the current forms the current loop by passing through the third MOSFET, the first MOSFET and the input inductor, so that the input inductor stores the energy; and when the first MOSFET is turned off, the current passes through the third MOSFET, the electrolytic capacitor, the body diode of the second MOSFET and the input inductor, so that the inductor releases the energy for charging the capacitor. It can be seen from the above-mentioned working process, the conventional PFC circuit has low conduction loss and low common mode interference, but in the energy releasing stage of the inductor, the body diode of the first MOSFET or the body diode of the second MOSFET in the first bridge arm is always in on-state, and thus the conduction loss is still large.

In view of this, many in the industry are endeavoring to find ways in which to design a controlling method for the bridgeless PFC circuit, further reducing the circuit conduction loss based on the conventional PFC circuit.

### SUMMARY

In order to solve the above-mentioned disadvantages existed in the bridgeless PFC circuit of the prior art, the disclosure provides a control circuit for a power converter, a conversion system and controlling method thereof.

According to a specific implementation of the disclosure, a conversion system is provided, including:
an AC power supply having a first end and a second end;
a power converter, including:
   a first bridge arm including a first switch and a second switch connected in series with each other, wherein, a second end of the first switch is connected with a first end of the second switch and is coupled to a first end of the AC power supply by an inductance component, and the first switch and the second switch work at a first switching frequency; and
   a second bridge arm connecting in parallel with the first bridge arm and including a third switch and a fourth switch connected in series with each other, wherein, a second end of the third switch is connected with a first end of the fourth switch and a second end of the AC power supply, and the third switch and the fourth switch work at a second switching frequency, and the second switching frequency is smaller than the first switching frequency; and
a control circuit, wherein the control circuit is used for controlling the first switch and the second switch in the first bridge arm, so that the current flowing through the inductance component is decreased to zero before at least one first switching cycle is over, and the first switching cycle corresponds to the first switching frequency.

In an embodiment, the control circuit is further used for controlling the third switch and the fourth switch in the second bridge arm, so that the third switch and the fourth switch are respectively at a low potential and a high potential in the first half cycle and the second half cycle of any second switching cycle. The second switching cycle corresponds to the second switching frequency. The second switching frequency is identical to the working frequency of the AC power supply. The second switching cycle includes plural first switching cycles. In the second switching cycle, the control circuit is further used for controlling the first switch and the second switch in the first bridge arm, so that the current flowing through the inductance component is just decreased to zero at the time that at least one first switching cycle is over. In the second switching cycle, the control circuit is further used for controlling the first switch and the second switch in the first bridge arm, so that the current flowing through the inductance component is greater than zero at any time of the at least one first switching cycle.

In another embodiment, the second switching cycle at least includes three first switching cycles. The control circuit is used for controlling the first switch and the second switch in the first bridge arm, wherein:
in a first switching cycle, the current flowing through the inductance component is decreased to zero before the end of the cycle;
in another first switching cycle, the current flowing through the inductance component is just decreased to zero at the end of the cycle; and
in still another first switching cycle, the current flowing through the inductance component is greater than zero at any time of the cycle.
In still another embodiment, the first switching cycle is a time period from the initial time t0 to the end time ts. The main switch in the first bridge arm begins to be turned on from the initial time t0. The auxiliary switch in the first bridge arm is turned off before the time t3 that the current flowing through the inductance component is decreased to zero, wherein, t3 is earlier than the end time ts. When the current flowing through the inductance component reaches a peak, the control circuit controls the main switch to be turned off and the auxiliary switch to be turned on.

In yet still another embodiment, the first switching cycle is a time period from the initial time t0 to the end time ts. The main switch in the first bridge arm begins to be turned on from the initial time t0. The auxiliary switch in the first bridge arm is turned off after the time t2 that the current flowing through the inductance component is decreased to zero, wherein, t2 is earlier than the end time ts. When the current flowing through the inductance component reaches the peak, the control circuit controls the main switch to be turned off and the auxiliary switch to be turned on.

In an embodiment, when the current flowing through the inductance component is decreased to zero, the main switch and the auxiliary switch in the first bridge arm are both in off-state. Parasitic capacitors of the main switch and the auxiliary switch resonate with the inductance component. The control circuit turns on the main switch at the bottom of the Nth voltage resonant valley thereof, and N is a natural number.

In another embodiment, when the current flowing through the inductance component is decreased to zero, the main switch and the auxiliary switch in the first bridge arm are both in off-state. Parasitic capacitors of the main switch and the auxiliary switch resonate with the inductance component. When the main switch has still not reached the bottom of the voltage resonant valley at the time that the first switching cycle is over, the control circuit forcibly turns on the main switch at an initial time of a next first switching cycle.

In still another embodiment, when a positive voltage exists between the first end and the second end of the AC power supply, the main switch is the second switch, and the auxiliary switch is the first switch; and when a negative voltage exists between the first end and the second end of the AC power supply, the main switch is the first switch, and the auxiliary switch is the second switch.

In yet still another embodiment, the first switch and the second switch are MOSFETs or IGBTs, and the material thereof is Si, SiC, GaN or a wide band gap semiconductor material.

In an embodiment, the third switch and the fourth switch are the MOSFETs or the IGBTs, and the material thereof is Si, SiC, GaN or the wide band gap semiconductor material.

In another embodiment, the third switch and the fourth switch are diodes, and the material thereof is Si, SiC, GaN or the wide band gap semiconductor material.

According to another specific implementation of the disclosure, the controlling method for the above-mentioned conversion system includes:
applying a first control signal and a second control signal to control the first switch and the second switch in the first bridge arm, wherein, the first control signal and the second control signal have a first switching cycle;
applying a third control signal and a fourth control signal to control the third switch and the fourth switch in the second bridge arm, wherein, the third control signal and the fourth control signal have a second switching cycle, and the second switching cycle is greater than the first switching cycle;
through the first control signal and the second control signal, making the current flowing through the inductance component be decreased to zero before at least one first switching cycle is over.

In an embodiment, the potential polarity of the third control signal is always opposite to that of the fourth control signal at any time of the second switching cycle.

In another embodiment, the second switching cycle is identical to the working cycle of the AC power supply, and the second switching cycle includes plural first switching cycles.

In still another embodiment, the controlling method further includes: through the first control signal and the second control signal, making the current flowing through the inductance component be just decreased to zero at the time that at least one first switching cycle is over.

In yet still another embodiment, the controlling method further includes: through the first control signal and the second control signal, making the current flowing through the inductance component be greater than zero at any time of the at least one first switching cycle.

In an embodiment, the second switching cycle at least includes three first switching cycles. The controlling method is used for applying the first control signal and the second control signal, so that: in a first switching cycle, the current flowing through the inductance component is decreased to zero before the end of the cycle; in another first switching cycle, the current flowing through the inductance component is just decreased to zero at the end of the cycle; and in still another first switching cycle, the current flowing through the inductance component is greater than zero at any time of the cycle.

In another embodiment, the first switching cycle is a time period from the initial time t0 to the end time ts. The first control signal begins to be applied from the initial time t0, and the second control signal is turned off before the time t3 that the current flowing through the inductance component is decreased to zero, wherein, t3 is earlier than the end time ts. When the current flowing through the inductance component reaches the peak, the first control signal is turned off and the second control signal begins to be applied.

In still another embodiment, the first switching cycle is the time period from the initial time t0 to the end time ts. The first control signal begins to be applied from the initial time t0, and the second control signal is turned off after the time t2 that the current flowing through the inductance component is decreased to zero, wherein, t2 is earlier than the end time ts. When the current flowing through the inductance component reaches the peak, the first control signal is turned off and the second control signal begins to be applied.

In yet still another embodiment, when the current flowing through the inductance component is decreased to zero, the first control signal and the second control signal are both in off-state. Parasitic capacitors of the main switch and the auxiliary switch in the first bridge arm resonate with the inductance component. The first control signal begins to be applied at the bottom of the Nth voltage resonant valley of the main switch, and N is a natural number.

In an embodiment, when the current flowing through the inductance component is decreased to zero, the first control signal and the second control signal are both in off-state. Parasitic capacitors of the main switch and the auxiliary switch in the first bridge arm resonate with the inductance component. If the main switch has still not reached the bottom of the voltage resonant valley at the time that the first switching cycle is over, the first control signal is forcibly applied at the initial time of the next first switching cycle.

In another embodiment, when a positive voltage exists between the first end and the second end of the AC power supply, the first control signal and the second control signal are respectively used for controlling the second switch and the first switch, and now the second switch and the first switch are respectively the main switch and the auxiliary switch; and when a negative voltage exists between the first end and the second end of the AC power supply, the first control signal and the second control signal are respectively used for controlling the first switch and the second switch, and now the first switch and the second switch are respectively the main switch and the auxiliary switch.

According to still another specific implementation of the disclosure, a control circuit for a power converter is provided. The power converter includes a first bridge arm and a second bridge arm, wherein, the first bridge arm includes a first switch and a second switch connected in series with each other, and a second end of the first switch is connected with a first end of the second switch; the second bridge arm is connected in parallel with the first bridge arm, wherein, the second bridge arm includes a third switch and a fourth switch connected in series with each other, and a second end of the third switch is connected with a first end of the fourth switch, and the control circuit includes:
a first control module for outputting a first control signal and a second control signal, so as to control the first switch and the second switch in the first bridge arm, wherein the first control signal and the second control signal have a first switching cycle;
a second control module for outputting a third control signal and a fourth control signal, so as to control the third switch and the fourth switch in the second bridge arm, wherein the third control signal and the fourth control signal have a second switching cycle, and the second switching cycle is greater than the first switching cycle;
wherein, through the first control signal and the second control signal, the control circuit makes the current flowing through an inductance component in the power converter be decreased to zero before at least one first switching cycle is over.

In an embodiment, the level polarity of the third control signal is always opposite to that of the fourth control signal at any time of the second switching cycle.

In another embodiment, through the first control signal and the second control signal, the control circuit further makes the current flowing through the inductance component be just decreased to zero at the time that at least one first switching cycle is over.

In still another embodiment, through the first control signal and the second control signal, the control circuit further makes the current flowing through the inductance component be greater than zero at any time of the at least one first switching cycle.

In yet still another embodiment, the second switching cycle at least includes three first switching cycles. Through the outputted first control signal and second control signal, the first control module makes that: in a first switching cycle, the current flowing through the inductance component is decreased to zero before the end of the cycle; in another first switching cycle, the current flowing through the inductance component is just decreased to zero at the end of the cycle; and in still another first switching cycle, the current flowing through the inductance component is greater than zero at any time of the cycle.

In an embodiment, the first switching cycle is a time period from the initial time t0 to the end time ts. The first control module begins to apply the first control signal from the initial time t0, and the second control signal is turned off before the time t3 that the current flowing through the inductance component is decreased to zero, wherein, t3 is earlier than the end time ts. When the current flowing through the inductance component reaches the peak, the first control module turns off the first control signal and begins to apply the second control signal.

In another embodiment, the first switching cycle is the time period from the initial time t0 to the end time ts. The first control module begins to apply the first control signal from the initial time t0, and the second control signal is turned off after the time t2 that the current flowing through the inductance component is decreased to zero, wherein, t2 is earlier than the end time ts. When the current flowing through the inductance component reaches the peak, the first control module turns off the first control signal and begins to apply the second control signal.

In still another embodiment, when the current flowing through the inductance component is decreased to zero, the first control signal and the second control signal are both in off-state. Parasitic capacitors of the main switch and the auxiliary switch in the first bridge arm resonate with the inductance component. The first control module begins to apply the first control signal at the bottom of the Nth voltage resonant valley of the main switch, and N is a natural number.

In yet still another embodiment, when the current flowing through the inductance component is decreased to zero, the first control signal and the second control signal are both in off-state. Parasitic capacitors of the main switch and the auxiliary switch in the first bridge arm resonate with the inductance component. If the main switch has still not reached the bottom of the voltage resonant valley at the time that the first switching cycle is over, the first control module forcibly applies the first control signal at the initial time of the next first switching cycle.

In an embodiment, when a positive voltage exists between the first end and the second end of the AC power supply, the first control signal and the second control signal are respectively used for controlling the second switch and the first switch, and now the second switch and the first switch are respectively the main switch and the auxiliary switch; and when a negative voltage exists between the first end and the second end of the AC power supply, the first control signal and the second control signal are respectively used for controlling the first switch and the second switch, and now the first switch and the second switch are respectively the main switch and the auxiliary switch.

In another embodiment, the control circuit is a micro control unit (MCU), a central processor unit (CPU), a digital signal processor (DSP), an ARM chip or an application specific integrated circuit (ASIC).

By using the control circuit for the power converter, the conversion system and the controlling method thereof of the disclosure, the first switch and the second switch in the first bridge arm are controlled so that the current flowing through the inductance component is decreased to zero before at least one first switching cycle is over. Thus, by making the power converter work in the DCM mode during a part of the first switching cycle, the conduction loss thereof can be reduced and the working efficiency can be improved. Additionally, by cooperating the switching times of the first switch and the second switch in the first bridge arm, various auxiliary effects can be realized, such as avoiding output energy recharge, zero-voltage turning-on the switch, and reducing switching loss of the circuit.

### BRIEF DESCRIPTION OF THE DRAWINGS

After reading specific implementations of the disclosure with reference to the accompanying drawings, readers can understand various aspects of the disclosure more clearly, wherein,

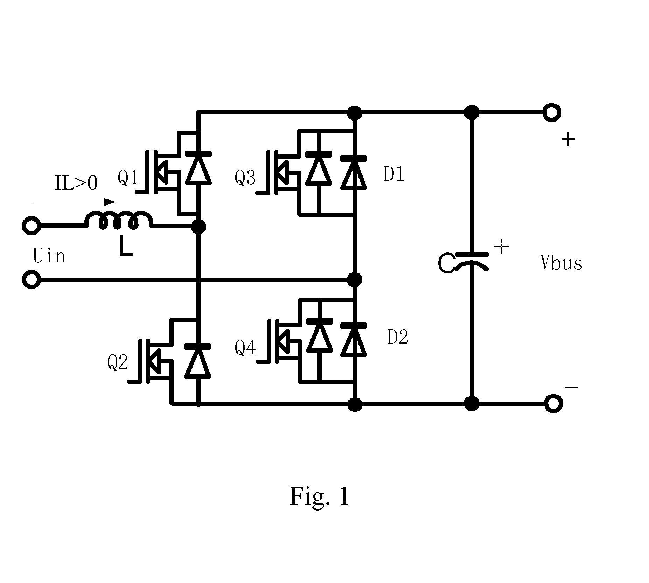

Fig. 1 depicts a schematic structural diagram of an embodiment of a bridgeless PFC circuit topology;

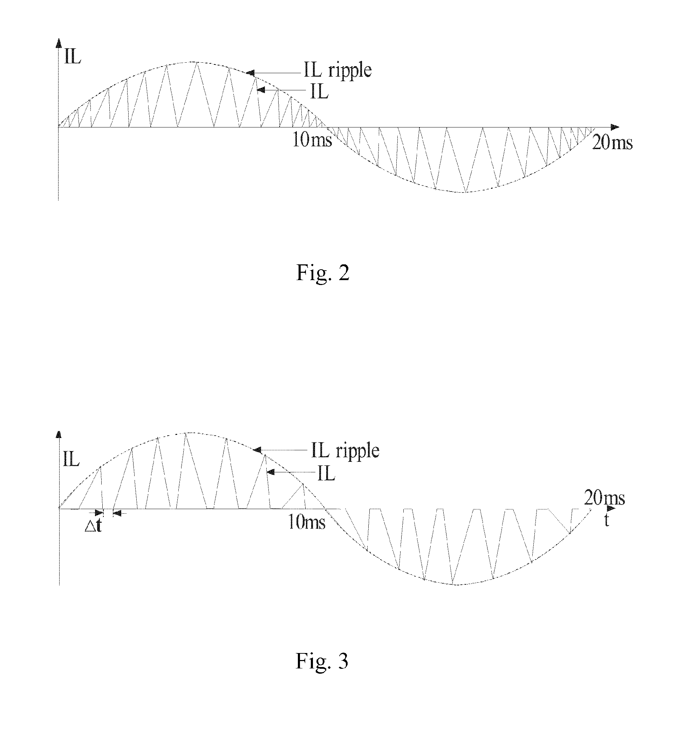

Fig. 2 depicts a schematic inductance current waveform diagram of the bridgeless PFC circuit in Fig. 1 working in a discontinuous current mode boundary;
Fig. 3 depicts a schematic inductance current waveform diagram of the bridgeless PFC circuit in Fig. 1 working in a discontinuous current mode;

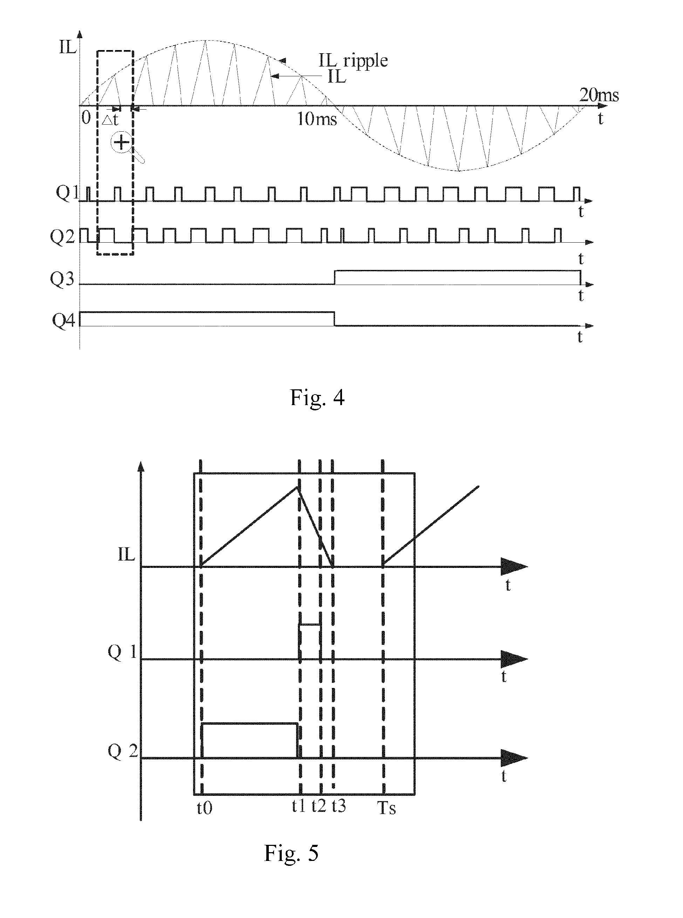

Fig. 4 depicts a schematic diagram of an inductance current waveform and driving waveforms of respective switches in the first bridge arm and the second bridge arm when the bridgeless PFC circuit works in the discontinuous current mode according to a specific implementation of the disclosure;
Fig. 5 depicts a schematic diagram of a corresponding inductance current waveform, and corresponding driving waveforms of the main switch and the auxiliary switch when the auxiliary switch in the first bridge arm is turned off in advance under the discontinuous current mode of the bridgeless PFC circuit;

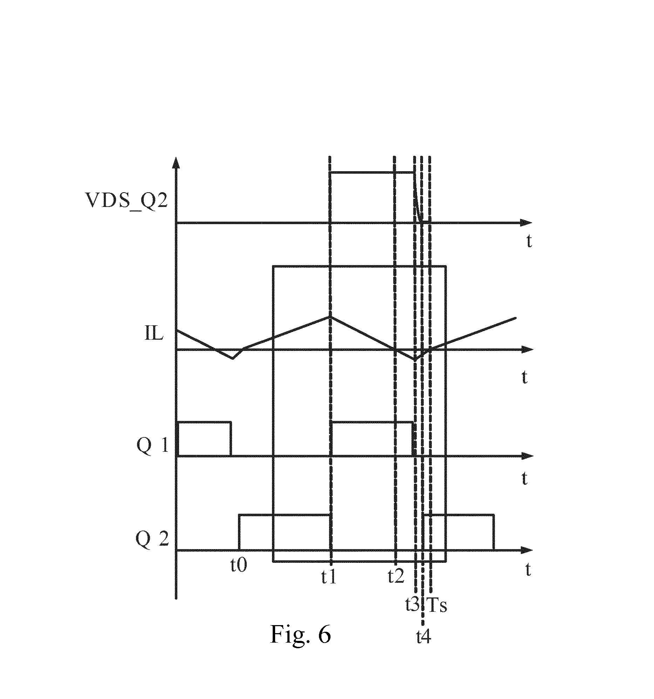

Fig. 6 depicts a schematic diagram of a corresponding inductance current waveform, corresponding driving waveforms of the main switch and the auxiliary switch and a corresponding VDS voltage waveform of the main switch when the auxiliary switch in the first bridge arm is turned off with a lag under the discontinuous current mode of the bridgeless PFC circuit;

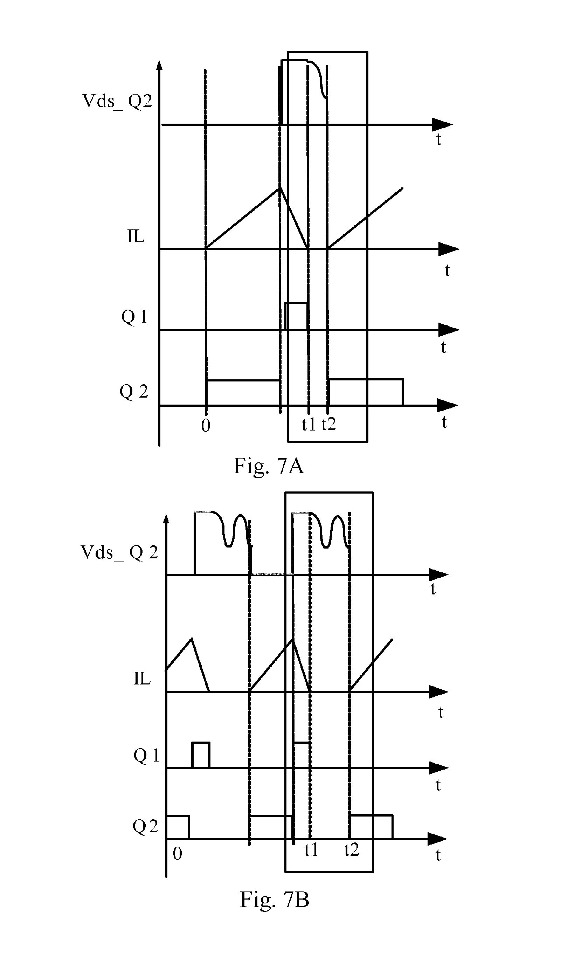

Fig. 7A depicts a schematic diagram of a corresponding inductance current waveform, corresponding driving waveforms of the main switch and the auxiliary switch and a corresponding VDS voltage waveform of the main switch when the main switch in the first bridge arm is turned on at the bottom of the first resonant valley under the discontinuous current mode of the bridgeless PFC circuit;
Fig. 7B depicts a schematic diagram of a corresponding inductance current waveform, corresponding driving waveforms of the main switch and the auxiliary switch and a corresponding VDS voltage waveform of the main switch when the main switch in the first bridge arm is turned on at the bottom of the Nth resonant valley under the discontinuous current mode of the bridgeless PFC circuit;

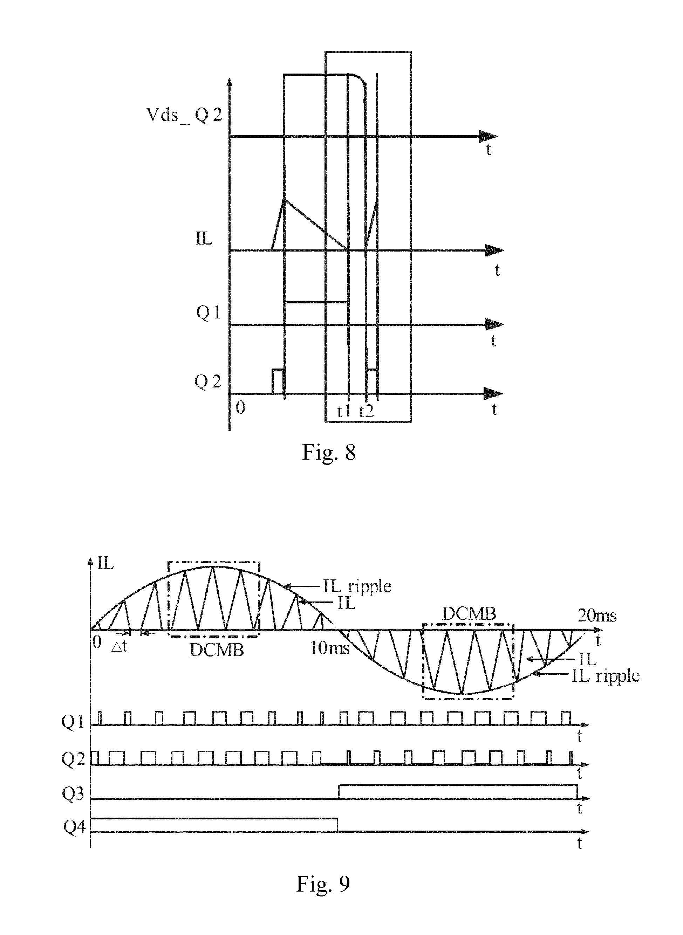

Fig. 8 depicts a schematic diagram of a corresponding inductance current waveform, corresponding driving waveforms of the main switch and the auxiliary switch and a corresponding VDS voltage waveform of the main switch when the main switch in the first bridge arm is forcibly turned on under the discontinuous current mode of the bridgeless PFC circuit;
Fig. 9 depicts a schematic diagram of an inductance current waveform and driving waveforms of the respective switches in the first bridge arm and the second bridge arm when the bridgeless PFC circuit works in a concurrent state of the discontinuous current mode and the discontinuous current mode boundary according to another specific implementation of the disclosure;

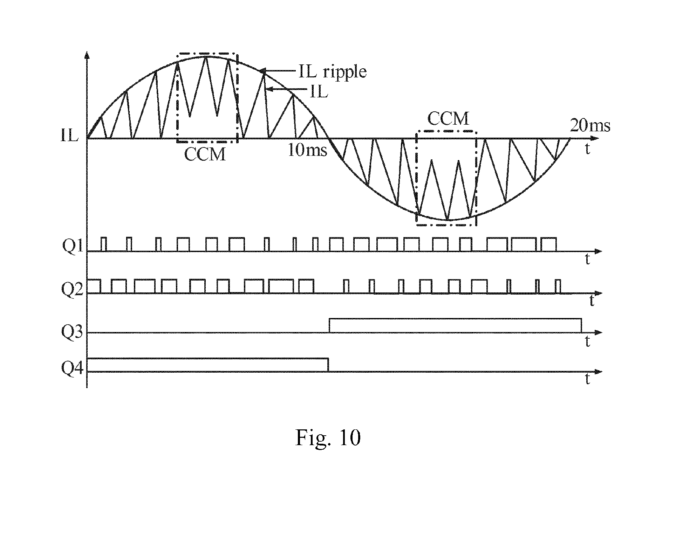

Fig. 10 depicts a schematic diagram of an inductance current waveform and driving waveforms of the respective switches in the first bridge arm and the second bridge arm when the bridgeless PFC circuit works in a concurrent state of the discontinuous current mode, the discontinuous current mode boundary and a continuous current mode according to still another specific implementation of the disclosure; and

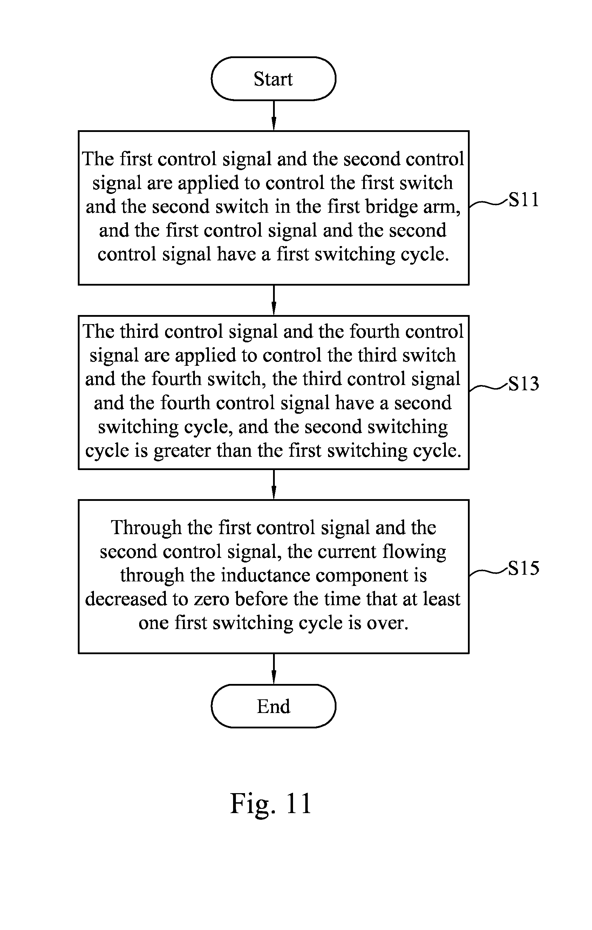

Fig. 11 depicts a schematic flow chart of a method for controlling the bridgeless PFC circuit working in the discontinuous current mode according to yet still another specific implementation of the disclosure.

### DETAILED DESCRIPTION

In order to make the technical contents of the disclosure more detailed and more comprehensive, various specific embodiments of the disclosure are described below with reference to the accompanying drawings, and the same reference numbers are used in the drawings to refer to the same or like parts. However, those of ordinary skills in the art should understand that the embodiments provided below are not used for limiting the scope of the disclosure. Moreover, the accompanying drawings are only for illustration and are not drawn to scale.

In the Detailed Description and the claims of the disclosure, the description relating to "coupled with" may refer to that a component is indirectly connected to another component through other components, or may also refer to that a component is directly connected to another component without using other components.

In the Detailed Description and the claims of the disclosure, the articles "a/an" and "the" refer to one or more, unless expressly specified otherwise.

As used herein, the terms "about", "approximately", "subsequently" or "near" are used to modify any micro-variable quantity, but these micro-variations do not change the nature of the quantity. In the embodiments, the error of the quantity modified by terms "about", "approximately", "subsequently" or "near" is in a range of 20%, preferably in a range of 10%, and more preferably in a range of 5%, unless expressly specified otherwise.

Fig. 1 depicts a schematic structural diagram of an embodiment of a bridgeless PFC circuit topology. Referring to Fig. 1, the bridgeless power factor correction (PFC) circuit includes two bridge arms, i.e., the first bridge arm and the second bridge arm. The first bridge arm, also referred to as "fast bridge arm", consists of high-frequency-switching semiconductor components Q1 and Q2 connected in series, such as the MOSFET, and the second bridge arm, also referred to as "slow bridge arm", consists of working-frequency-switching semiconductor components connected in series, such as a slow MOSFET.

When Uin is greater than 0, Q2 and Q4 are turned on, and the current forms a loop by passing through the inductor L, the MOSFET Q2, and the MOSFET Q4, so that the inductor L stores energy; and when Q2 is turned off (at this time Q4 works at the working frequency and is still in on-state), the current passes through the inductor L, the body diode of Q1, the electrolytic capacitor C and the MOSFET Q4, so that the inductor L releases the energy for charging the capacitor C.

When Uin is smaller than 0, Q1 and Q3 are turned on, and the current forms a loop by passing through the MOSFET Q3, the MOSFET Q1 and the inductor L, so that the inductor L stores the energy; and when Q1 is turned off (at this time Q3 works at the working frequency and is still in on-state), the current passes through the MOSFET Q3, the electrolytic capacitor C, the body diode of Q2 and the inductor L, so that the inductor L releases the energy for charging the capacitor C. It can be seen from the above-mentioned working process, the PFC circuit has advantages such as low conduction loss, low common mode interference and high utilization rate of components, but since in the energy releasing state of the inductor L, the body diode of the MOSFET Q1 or the body diode of the MOSFET Q2 is always in on-state, the conduction loss in the circuit is still large.

Additionally, terms are briefly introduced below with reference to the bridgeless PFC circuit in Fig. 1. In terms of the state of the inductance current, the working mode of the bridgeless PFC circuit is divided into: a discontinuous current mode, a continuous current mode and a discontinuous current mode boundary. The discontinuous current mode (DCM), also referred to as "current discontinuous state", means that the inductance current has been decreased to zero before the end of a switching cycle corresponding to the switch Q1 or Q2 in the first bridge arm. The continuous current mode (CCM), also referred to as "continuous current state", means that the inductance current is still greater than zero at the end of a switching cycle corresponding to the switch Q1 or Q2 in the first bridge arm. The discontinuous current mode boundary (DCMB), also referred to as "discontinuous current state boundary", means that the inductance current is just decreased to zero at the end of a switching cycle corresponding to the switch Q1 or Q2 in the first bridge arm.

Fig. 2 depicts a schematic inductance current waveform diagram of the bridgeless PFC circuit in Fig. 1 working in the discontinuous current mode boundary.

Referring to Fig. 2, when the bridgeless PFC circuit works in the DCMB, a momentary waveform of the inductance current in each switching cycle (the switching cycle corresponding to Q1 or Q2 in the first bridge arm) is marked as IL, and an envelope line of the peak current flowing through the inductor in each switching cycle is marked as IL_ripple.

Taking the period that Uin is greater than 0 (i.e., a positive voltage) as an example, in the DCMB mode shown in Fig. 2, for example, during the time period that the MOSFET Q2 in the first bridge arm is turned on, the input voltage Uin forms a loop through Q2 and D2, to store energy for the inductor L, thereby increasing the inductance current IL. During the time period that Q2 is turned off, the inductor L delivers the energy stored by the inductor L to the output end through the body diode of Q1 and D2, and at this time the inductance current IL is decreased. At the time that the inductance current IL is decreased to zero, the MOSFET Q2 is turned on again for entering the next switching cycle.

It should be understood that, in a DCMB control manner, the switch Q1 or Q2 in the first bridge arm is turned off, and the switch Q1 or Q2 is turned on again until the inductance current is decreased to zero. The DCMB control manner is a variable frequency control manner. The switch loss caused by the backward recovery of the diode can be eliminated by decreasing the inductance current IL to zero at the time that the switch is turned on again. However, when the bridgeless PFC circuit is in the DCMB, the working frequency of the converter is very high at the zero-crossing point of a line voltage, so that it is difficult for designing an EMI filter.

Fig. 3 depicts a schematic inductance current waveform diagram of the bridgeless PFC circuit in Fig. 1 working in the discontinuous current mode. Fig. 4 depicts a schematic diagram of an inductance current waveform and driving waveforms of respective switches in the first bridge arm and the second bridge arm when the bridgeless PFC circuit works in the discontinuous current mode according to a specific implementation of the disclosure.

Comparing Fig. 3 with Fig. 2, it is easy to know the difference between the DCM mode and the DCMB mode is that, the switch Q1 or Q2 in the first bridge arm is in any two adjacent switching cycles, a dead time period □t exists between the time that the inductance current is decreased to zero in the prior switching cycle and the time that the inductance current is increased when the switch is turned on again. It should be specially pointed out that, the bridgeless PFC circuit of the disclosure can reduce the conduction loss in the circuit and improve the working efficiency of the converter based on the DCM mode.

Referring to Figs. 1 and 4, the conversion system of the disclosure includes an AC power supply, a power converter and a control circuit. Particularly, the power converter includes a first bridge arm and a second bridge arm. The first bridge arm includes a first switch Q1 and a second switch Q2 connected in series with each other. A second end of the first switch Q1 is connected with a first end of the second switch Q2 and is coupled to a first end of the AC power supply by an inductance component L. The first switch Q1 and the second switch Q2 work at a first switching frequency (corresponding to a first switching cycle). The second bridge arm and the first bridge arm are connected in parallel. The second bridge arm includes a third switch Q3 and a fourth switch Q4 connected in series with each other. A second end of the third switch Q3 is connected with a first end of the fourth switch Q4 and a second end of the AC power supply. The third switch Q3 and the fourth switch Q4 work at a second switching frequency. The second switching frequency is smaller than the first switching frequency, or the second switching cycle is greater than the first switching cycle.

Moreover, the conversion system further includes a control circuit (not shown). The control circuit controls the first switch Q1 and the second switch Q2 in the first bridge arm, so that the inductance current IL flowing through the inductance component L is decreased to zero before at least one first switching cycle is over. In other words, in the conversion system of the disclosure, the switches Q1 and Q2 are controlled by the control circuit, so that the power converter works in the DCM mode during at least one first switching cycle.

In an embodiment, the control circuit further controls the third switch Q3 and the fourth switch Q4 in the second bridge arm, so that the third switch Q3 and the fourth switch Q4 are respectively at the low potential and the high potential in the first half cycle (the first 10 ms as shown in Fig. 4) and the second half cycle (the second 10 ms as shown in Fig. 4) of any second switch cycles. It can be seen from Fig. 4, the second switching cycle includes plural first switching cycles. It should be understood by those of skills in the art that, the second switching frequency of the switches Q3 and Q4 in the second bridge arm includes but not limited to the working frequency of the AC power supply. In some other embodiments, the second switching frequency also may be greater than or equal to the working frequency, so that the first switching frequency is much greater than the second switching frequency.

In an embodiment, during the second switching cycle (such as, during a time period of 20 ms), the control circuit further controls the first switch Q1 and the second switch Q2 in the first bridge arm, so that the inductance current flowing through the inductance component L is just decreased to zero at the time that at least one first switching cycle is over. That is, in the conversion system of the disclosure, the switches Q1 and Q2 are controlled by the control circuit, so that the power converter works in the DCM mode during at least one first switching cycle and works in the DCMB mode during another at least one first switching cycle. Thus, in the embodiment, the power converter works in a mixed mode of the DCM mode and the DCMB mode during a part of the time periods of the second switching cycle, which can also reduce the conduction loss in the circuit and improve the working efficiency of the converter.

Additionally, the main switch and the auxiliary switch in the first bridge arm can be defined according to the input voltage polarity of the AC power supply. For example, when a positive voltage exists between the first end and the second end of the AC power supply (such as when the positive voltage between the upper end and the lower end in Fig. 1), the main switch is the second switch Q2, and the auxiliary switch is the first switch Q1. Correspondingly, when a negative voltage exists between the first end and the second end of the AC power supply (such as the negative voltage between the upper end and the lower end in Fig. 1), the main switch is the first switch Q1, and the auxiliary switch is the second switch Q2.

In an embodiment, the first switch Q1 and the second switch Q2 are the MOSFETs or the IGBTs, and the material thereof is Si, SiC, GaN or the wide band gap semiconductor material.

For the switches Q3 and Q4 in the second bridge arm, in an embodiment, the third switch and the fourth switch are the MOSFETs or the IGBTs, and the material thereof is Si, SiC, GaN or the wide band gap semiconductor material. In another embodiment, the third switch and the fourth switch are diodes, and the material thereof is Si, SiC, GaN or the wide band gap semiconductor material.

Fig. 5 depicts a schematic diagram of a corresponding inductance current waveform and corresponding driving waveforms of the main switch and the auxiliary switch when the auxiliary switch in the first bridge arm is turned off in advance under the discontinuous current mode of the bridgeless PFC circuit.

Referring to Fig. 5, in the first embodiment that the bridgeless PFC circuit works in the discontinuous current mode, a first switching cycle is a time period from the initial time t0 to the end time Ts. Moreover, the main switch Q2 in the first bridge arm begins to be turned on from the initial time t0, and the auxiliary switch Q1 in the first bridge arm is turned off before the time t3 that the current IL flowing through the inductor L is decreased to zero, wherein t3 is earlier than the end time ts. It can be seen from Fig. 5, the time that the inductance current IL is decreased to zero corresponds to t3, and the time that the auxiliary switch Q1 is turned off corresponds to t2, wherein t2 is smaller than t3. Also since t3 is earlier than ts, meaning that the dead time period exists between the time that the inductance current is decreased to zero in the cycle and the time that the main switch is turned on again in the next cycle, it can be determined that the power converter works in the DCM mode.

In an embodiment, when the current IL flowing through the inductance component reaches the peak, the control circuit controls the main switch Q2 to be turned off and the auxiliary switch Q1 to be turned on. It should be noted that, the controlling method of the disclosure is provided under the condition that the circuit works at an ideal state, and the switches in the same bridge arm have no commutation time. That is, the switch Q1 is turned off while the switch Q2 is turned on; or the switch Q2 is turned off while the switch Q1 is turned on.

Certainly, in other embodiments, it also can be chosen that the auxiliary switch in the first bridge arm is turned off at latest at the zero-crossing point of the inductance current, which can also achieve the purpose of preventing the output energy recharge.

Fig. 6 depicts a schematic diagram of a corresponding inductance current waveform, corresponding driving waveforms of the main switch and the auxiliary switch and a corresponding VDS voltage waveform of the main switch when the auxiliary switch in the first bridge arm is turned off with a lag under the discontinuous current mode of the bridgeless PFC circuit.

Referring to Fig. 6, in the second embodiment that the bridgeless PFC circuit works in the discontinuous current mode, a first switching cycle is a time period from the initial time t0 to the end time Ts. Moreover, the main switch Q2 in the first bridge arm begins to be turned on from the initial time t0, and the auxiliary switch Q1 in the first bridge arm is turned off after the time t2 that the current IL flowing through the inductor L is decreased to zero, wherein t2 is earlier than the end time ts. It can be seen from Fig. 5, in the cycle, the time that the inductance current IL is decreased to zero corresponds to t2, and the time that the switch Q1 is turned off corresponds to t3, wherein t2 is smaller than t3. Also since t2 is earlier than ts, meaning that the dead time period exists between the time t2 that the inductance current is decreased to zero in the cycle and the time t4 that the main switch is turned on again in the next cycle, it can be determined that the power converter works in the DCM mode.

In an embodiment, when the current IL flowing through the inductance component reaches the peak, the control circuit controls the main switch Q2 to be turned off and the auxiliary switch Q1 to be turned on.

The working process of the power converter is described again with reference to Fig. 6. At the time t1, the main switch Q2 is turned off, the switch Q1 is turned on, and the inductor L releases the energy through the switches Q1 and Q4. Afterwards, the inductance current IL is decreased to zero at the time t2, and the current is reversed (i.e., from positive to negative) after the time t2. At this time, the switch Q1 is still in on-state. The switch Q1 is turned off until the time t3. When the switch Q1 is turned off, the voltage VDS_Q2 at two ends of the switch Q2 begins to be decreased. If the switch Q2 is turned on at the time that the voltage is decreased to zero (the time t4 in Fig. 6), the switch Q2 can be turned on at a zero voltage.

Fig. 7A depicts a schematic diagram of a corresponding inductance current waveform, corresponding driving waveforms of the main switch and the auxiliary switch and a corresponding VDS voltage waveform of the main switch when the main switch in the first bridge arm is turned on at the bottom of the first resonant valley under the discontinuous current mode of the bridgeless PFC circuit. Fig. 7B depicts a schematic diagram of a corresponding inductance current waveform, corresponding driving waveforms of the main switch and the auxiliary switch and a corresponding VDS voltage waveform of the main switch when the main switch in the first bridge arm is turned on at the bottom of the Nth resonant valley under the discontinuous current mode of the bridgeless PFC circuit.

Referring to Fig. 7A, in the third embodiment that the bridgeless PFC circuit works in the discontinuous current mode, when the current IL flowing through the inductance component L is decreased to zero, the main switch Q2 and the auxiliary switch Q1 in the first bridge arm are both in off-state. Parasitic capacitors of the main switch Q2 and the auxiliary switch resonate with the inductance component.

Particularly, when the input voltage Uin of the AC power supply is a positive voltage (Uin > 0), the third switch Q3 in the second bridge arm is turned on, and the fourth switch Q4 is turned off. At this time, the second switch Q2 in the first bridge arm is the main switch, and the first switch Q1 is the auxiliary switch. The inductance current IL is decreased to zero at the time t1, and at this time, the main switch Q2 and the auxiliary switch Q1 are both in off-state. Thus, the DS capacitor between the drain electrode and the source electrode of the switch Q1 and the DS capacitor between the drain electrode and the source electrode of the switch Q2 resonate with the loop inductance. The DS resonant voltage at the main switch Q2 is decreased gradually and reaches the bottom of the resonant valley at the time t2. In the embodiment, Q2 is turned on at the valley bottom of the DS resonant voltage of the switch Q2, so that the switching loss of the switch Q2 can be reduced. When the switch Q2 is turned on again at the time t2, the inductance current IL begins to be increased from zero again.

Similarly, when the input voltage Uin of the AC power supply is a negative voltage (Uin < 0), the fourth switch Q4 in the second bridge arm is turned on, and the third switch Q3 is turned off. At this time, the first switch Q1 in the first bridge arm is the main switch, and the second switch Q2 is the auxiliary switch. The DS capacitor between the drain electrode and the source electrode of the switch Q2 and the DS capacitor between the drain electrode and the source electrode of the switch Q1 resonate with the loop inductance. The DS resonant voltage at the main switch Q1 is decreased gradually and reaches the bottom of the resonant valley. Q1 is turned on at the valley bottom of the DS resonant voltage of the switch Q1, so that the switching loss of the switch Q1 can be reduced.

It should be pointed out that, during the process that the DS capacitor between the drain electrode and the source electrode of the switch Q1 in the first bridge arm and the DS capacitor between the drain electrode and the source electrode of Q2 are resonating with the loop inductance, the DS resonant voltage of the main switch can reach the valley bottom for plural times. Thus, in the case that the circuit working frequency is allowed, the main switch in the first bridge arm can be turned on at the bottom of the Nth DS resonant voltage valley (N is greater than or equal to 2).

Fig. 8 depicts a schematic diagram of a corresponding inductance current waveform, corresponding driving waveforms of the main switch and the auxiliary switch and a corresponding VDS voltage waveform of the main switch when the main switch in the first bridge arm is forcibly turned on under the discontinuous current mode of the bridgeless PFC circuit.

Referring to Fig. 8, when the current IL flowing through the inductance component L is decreased to zero, the main switch and the auxiliary switch in the first bridge arm are both in off-state. The parasitic capacitor between the drain electrode and the source electrode of the main switch and the parasitic capacitor between the drain electrode and the source electrode of the auxiliary switch resonate with the inductance component L. Different from Figs. 7A and 7B, in the embodiment shown in Fig. 8, when the main switch Q2 in the first bridge arm (taking Uin > 0 as an example) has still not reached the bottom of the voltage resonant valley at the time t2 that a first switching cycle is over, the main switch Q2 is forcibly turned on at the initial time t2 of the next first switching cycle. Additionally, it also can be seen from Fig. 8, between the two adjacent first switching cycles, a delayed period exists between the time t1 that the inductance current IL is decreased to zero and the time t2 that the inductance current IL begins to rise from zero again. Thus, the bridgeless PFC circuit works in the DCM mode at least during a part of the first switching cycles.

Fig. 9 depicts a schematic diagram of an inductance current waveform and driving waveforms of the respective switches in the first bridge arm and the second bridge arm when the bridgeless PFC circuit works in a concurrent state of the discontinuous current mode and the discontinuous current mode boundary according to another specific implementation of the disclosure. Fig. 10 depicts a schematic diagram of an inductance current waveform and driving waveforms of the respective switches in the first bridge arm and the second bridge arm when the bridgeless PFC circuit works in a concurrent state of the discontinuous current mode, the discontinuous current mode boundary and a continuous current mode according to still another specific implementation of the disclosure.

Referring to Fig. 9, the second switching cycle of the bridgeless PFC circuit is 20 ms. The first 10 ms corresponds to the positive half cycle of the input voltage of the AC power supply, and the second 10 ms corresponds to the negative half cycle of the input voltage of the AC power supply. Taking Uin > 0 as an example, the first half cycle of the second switching cycle includes plural first switching cycles, wherein, during a part of the first switching cycles, the circuit works in the DCM mode; during another part of the first switching cycles, the circuit works in the DCMB mode.

Comparing Fig. 10 with Fig. 9, the bridgeless PFC circuit also includes the DCM working mode and the DCMB working mode. However, Fig. 10 also includes the CCM working mode during part of the first switching cycles. That is, by the controlling method of the disclosure, the bridgeless PFC circuit not only can work in the DCM mode independently, but also can work in the mixed mode of the DCM mode and the DCMB mode, the mixed mode of the DCM mode, the DCMB mode and the CCM mode and the mixed mode of the DCM mode and the CCM mode. In all these working modes, both the reduction of the conduction loss in the circuit and the improvement of the working efficiency of the converter can be realized by the DCM mode.

It should be pointed out that, the disclosure not only discloses a conversion system based on the bridgeless PFC circuit, but also discloses a controlling method for controlling the conversion system. Particularly, Fig. 11 depicts a schematic flow chart of a method for controlling the bridgeless PFC circuit working in the discontinuous current mode according to yet another specific implementation of the disclosure.

In the controlling method, the step S11 is performed firstly. The first control signal and the second control signal are respectively applied to the switch Q1 and the switch Q2 in the first bridge arm for controlling the switches. The first control signal and the second control signal have a first switching cycle. For example, the switch Q2 is turned on by the second control signal and the switch Q1 is turned off by the first control signal, so that the inductance current IL begins to rise from zero; however, the switch Q2 is turned off by the second control signal and the switch Q1 is turned on by the first control signal, so that the inductance current IL is decreased to zero from the current peak.

Then, in the step S13, the third control signal and the fourth control signal are respectively applied to the switch Q3 and the switch Q4 in the second bridge arm for controlling the switches. The third control signal and the fourth control signal have a second switching cycle. For example, the polarity of the third control signal is always opposite to that of the fourth control signal at any time of the second switching cycle. When the third control signal is at the high potential, the fourth control signal is at the low potential; and when the third control signal is at the low potential, the fourth control signal is at the high potential. Additionally, as shown in Figs. 4, 9 or 10, the second switching cycle includes plural first switching cycle. Moreover, each of the first switching cycles may not be the same, and the working mode of the power supply converter may not be the same in different first switching cycles. For example, the power supply converter works in the DCM mode during a part of the first switching cycles, works in the DCMB mode during another part of the first switching cycles, and works in the CCM mode during still another part of the first switching cycles.

Finally, in the step S15, by the first control signal and the second control signal, the current flowing through the inductance component is decreased to zero before at least one first switching cycle is over. That is, the power supply converter works in the DCM mode during at least one first switching cycle, so that the inductance current is increased gradually again from zero with a time delay after the time that the inductance current is decreased to zero in the last cycle, thereby reducing the conduction loss in the circuit and improving the working efficiency of the converter.

It should be pointed out that, the above-mentioned various embodiments not only may be used for describing the conversion system based on the bridgeless PFC circuit and the controlling method thereof, but also may be used for describing the control circuit of the conversion system. In an embodiment, the control circuit includes a first control module and a second control module.

The first control module is used for outputting a first control signal and a second control signal, so as to control the first switch and the second switch in the first bridge arm (such as the switches Q1 and Q2 in Fig. 1). The first control signal and the second control signal have a first switching cycle.

The second control module is used for outputting a third control signal and a fourth control signal, so as to control the third switch and the fourth switch in the second bridge arm (such as the switches Q3 and Q4 in Fig. 1). The third control signal and the fourth control signal have a second switching cycle. The second switching cycle is greater than the first switching cycle.

It should be pointed out that, through the first control signal and the second control signal from the first control module, the control circuit of the disclosure makes the current flowing through the inductance component in the power converter be decreased to zero before at least one first switching cycle is over, thereby reducing the conduction loss in the circuit and improving the working efficiency. In some specific embodiments, the control circuit is a micro control unit (MCU), a central processor unit (CPU), a digital signal processor (DSP), an ARM chip or an application specific integrated circuit (ASIC).

## Claims

1. A conversion system, comprising:
an AC power supply having a first end and a second end;
a power converter, comprising:
a first bridge arm comprising a first switch and a second switch connected in series with each other, wherein, a second end of the first switch is connected to a first end of the second switch and is coupled to a first end of the AC power supply by an inductance component, and the first switch and the second switch work at a first switching frequency; and
a second bridge arm connecting in parallel with the first bridge arm and comprising a third switch and a fourth switch connected in series with each other, wherein, a second end of the third switch is connected to a first end of the fourth switch and a second end of the AC power supply, the third switch and the fourth switch work at a second switching frequency, and the second switching frequency is smaller than the first switching frequency; and
a control circuit, wherein the control circuit is used for controlling the first switch and the second switch in the first bridge arm, so that the current flowing through the inductance component is decreased to zero before at least one first switching cycle is over, and the first switching cycle corresponds to the first switching frequency.

2. The conversion system of claim 1, wherein the control circuit is further used for controlling the third switch and the fourth switch in the second bridge arm, so that the third switch and the fourth switch are respectively at a low potential and a high potential in a first half cycle and a second half cycle of any second switching cycle, and the second switching cycle corresponds to the second switching frequency.

3. The conversion system of claim 2, wherein the second switching frequency is identical to a working frequency of the AC power supply, and the second switching cycle comprises plural first switching cycles.

4. The conversion system of claim 2, wherein in the second switching cycle, the control circuit is further used for controlling the first switch and the second switch in the first bridge arm, so that the current flowing through the inductance component is just decreased to zero at the time that at least one first switching cycle is over.

5. The conversion system of claim 2, wherein in the second switching cycle, the control circuit is further used for controlling the first switch and the second switch in the first bridge arm, so that the current flowing through the inductance component is greater than zero at any time of the at least one first switching cycle.

6. The conversion system of claim 1, wherein the first switching cycle is a time period from the initial time t0 to the end time ts, the main switch in the first bridge arm begins to be turned on from the initial time t0, the auxiliary switch in the first bridge arm is turned off before or after the time that the current flowing through the inductance component is decreased to zero, which is earlier than the end time ts.

7. The conversion system of claim 1, wherein when the current flowing through the inductance component is decreased to zero, the main switch and the auxiliary switch in the first bridge arm are both in off-state, and parasitic capacitors of the main switch and the auxiliary switch resonate with the inductance component, wherein,
the control circuit is used for turning on the main switch at the bottom of the Nth voltage resonant valley thereof, and N is a natural number.

8. The conversion system of claim 1, wherein the first switch and the second switch are MOSFETs or IGBTs, and the material thereof is Si, SiC, GaN or a wide band gap semiconductor material.

9. The conversion system of claim 1, wherein the third switch and the fourth switch are diodes, MOSFETs or IGBTs, and the material thereof is Si, SiC, GaN or a wide band gap semiconductor material.

10. A controlling method for the conversion system of claim 1, wherein the controlling method comprises:
applying a first control signal and a second control signal to control the first switch and the second switch in the first bridge arm, wherein, the first control signal and the second control signal have a first switching cycle;
applying a third control signal and a fourth control signal to control the third switch and the fourth switch in the second bridge arm, wherein, the third control signal and the fourth control signal have a second switching cycle, and the second switching cycle is greater than the first switching cycle;
through the first control signal and the second control signal, making the current flowing through the inductance component be decreased to zero before at least one first switching cycle is over.

11. The controlling method of claim 10, wherein the controlling method further comprises:
through the first control signal and the second control signal, making the current flowing through the inductance component be just decreased to zero at the time that at least one first switching cycle is over.

12. The controlling method of claim 10, wherein the controlling method further comprises:
through the first control signal and the second control signal, making the current flowing through the inductance component be greater than zero at any time of the at least one first switching cycle.

13. A control circuit for a power converter, wherein the power converter comprises a first bridge arm and a second bridge arm, the first bridge arm comprises a first switch and a second switch connected in series with each other, and a second end of the first switch is connected with a first end of the second switch; and the second bridge arm is connected in parallel with the first bridge arm, wherein, the second bridge arm comprises a third switch and a fourth switch connected in series with each other, and a second end of the third switch is connected with a first end of the fourth switch, and the control circuit comprises:
a first control module for outputting a first control signal and a second control signal, so as to control the first switch and the second switch in the first bridge arm, wherein, the first control signal and the second control signal have a first switching cycle;
a second control module for outputting a third control signal and a fourth control signal, so as to control the third switch and the fourth switch in the second bridge arm, wherein, the third control signal and the fourth control signal have a second switching cycle, and the second switching cycle is greater than the first switching cycle;
wherein, through the first control signal and the second control signal, the control circuit makes the current flowing through an inductance component in the power converter be decreased to zero before at least one first switching cycle is over.

14. The control circuit of claim 13, wherein through the first control signal and the second control signal, the control circuit further makes the current flowing through the inductance component be just decreased to zero at the time that at least one first switching cycle is over.

15. The control circuit of claim 13, wherein through the first control signal and the second control signal, the control circuit further makes the current flowing through the inductance component be greater than zero at any time of at least one first switching cycle.

16. The control circuit of claim 13, wherein the control circuit is a micro control unit (MCU), a central processor unit (CPU), a digital signal processor (DSP), an ARM chip or an application specific integrated circuit (ASIC).
